# EUROPEAN PATENT APPLICATION

(11) **EP 3 122 052 A1**
(43) Date of publication of application: **25.01.2017**
(21) Application number: 15306209.6
(22) Date of filing: 24.07.2015
(51) Int. Cl.: H04N 19/94

(54) **METHOD AND APPARATUS FOR ENCODING AND DECODING A VIDEO SIGNAL BASED ON VECTORISED SPATIOTEMPORAL SURFACES**

(71) Applicant: ALCATEL LUCENT, 92100 Boulogne-Billancourt (FR)
(72) Inventor: Aerts, Maarten, 2018 Antwerpen (BE); Rondao Alface, Patrice, 2018 Antwerpen (BE)
(74) Representative: D'Halleweyn, Nele Veerle Trees Gertrudis

(57) **Abstract**

An encoder for encoding a video signal, comprising a spatiotemporal edge detector configured for detecting a number of spatiotemporal surfaces of said video signal, a vectorising module configured for said spatiotemporal surfaces and an attribute tracer configured for determining for said vectorised spatiotemporal surfaces a number of texture paint attributes, said number of texture paint attributes characterising at least one of a colour and a texture on at least one side of a respective vectorised spatiotemporal surface of said vectorised spatiotemporal surfaces; and wherein said encoder is configured for encoding said video signal based on said vectorised spatiotemporal surfaces and said number of texture paint attributes.

## Description

### Field of the Invention

The field of the invention relates to video coding. Particular embodiments relate to an encoder for encoding a video signal, a decoder for decoding an encoded video signal, a system for coding a video signal and decoding an encoded video signal, methods for encoding a video signal and/or decoding an encoded video signal, and a computer program product.

### Background

Over the last decade a multitude of screen surfaces with different resolutions have emerged. Also, some viewing devices have broadband access, while others have limited access. Those two properties don't always correlate. To serve this heterogeneous group of devices with the same content over a limiting network, scalable video codecs have focused on offering quality layers, generally based on resolution or PSNR-evaluated quality. The base layer comprises the low frequencies, suitable for small screens, and each quality layer adds more and higher frequency components. A device with a small screen only requires a base layer, while larger screens need more quality layers, and hence, more bandwidth.

This approach does not benefit devices with large screens and limited bandwidth. Scalable video codec's base layers are not suited for large screens. They make the video look blurry, due to the low frequency aspect. The human perception of quality does not only look at resolution. We perceive 'simplified', but high frequent versions of an image better than blurry, 'complex' versions, e.g. as in cartoons. Although almost all texture information is lost, sharp edges are kept. A cartoon still looks like an appealing version of reality - much more so than a blurred video with the same amount of bits (in the information-theoretical sense).

### Summary

It is an object of embodiments of the present invention to reduce storage and transmission requirements for storing and transmitting encoded video signals.

A related object for some embodiments of the present invention is compressing an image more according to MOS (Mean Opinion Score) rather than PSNR (Peak Signal-to-Noise Ratio). The MPEG-family (Motion Pictures Expert Group) of encoders have reached the point where any more substantial compression results in highly visible artefacts. In contrast, it is an object of some embodiments of the invention to result in less visually disturbing artefacts when a transmission error occurs.

According to a first aspect of the invention, there is provided an encoder for encoding a video signal, comprising a spatiotemporal edge detector, a vectorising module, and an attribute tracer. The spatiotemporal edge detector is configured for detecting a number of spatiotemporal surfaces of said video signal. The vectorising module is configured for vectorising said spatiotemporal surfaces. The attribute tracer is configured for determining for said vectorised spatiotemporal surfaces a number of texture paint attributes, said number of texture paint attributes characterising at least one of a colour and a texture on at least one side of a respective vectorised spatiotemporal surface of said vectorised spatiotemporal surfaces. Also, said encoder is configured for encoding said video signal based on said vectorised spatiotemporal surfaces and said number of texture paint attributes.

In this manner, by encoding the video signal on the basis of vectorised spatiotemporal surfaces, video signals can be represented efficiently, and hence requirements for storage and transmission can be reduced. Also, by using a vector-based representation and texture paint attributes, the method allows to encode video signals in line with MOS rather than with PSNR. Consequently, if limited bandwidth enforces the encoder to transmit degraded video, or also if a transmission error occurs, there is less likelihood of a visually disturbing artefact occurring.

In a particular embodiment, a texture paint attribute comprises at least one of: a paint colour indication; a dictionary-based dynamic texture; and a generative dynamic texture.

It is a further object of some embodiments of the present invention to serve different devices from a single video representation using quality layers, where the quality range corresponds to our human perception of 'simplified' to more 'detailed' versions of the content.

In an embodiment, said spatiotemporal edge detector is configured for detecting said number of spatiotemporal surfaces iteratively in a cascaded manner, in order to determine a plurality of layers, of which plurality of layers a first layer comprises a first number of spatiotemporal surfaces and a second layer comprises a second number of more fine-grained spatiotemporal surfaces.

In this manner, the encoder caters to different devices that are served from a single video representation using quality layers, even when the device has a large resolution and a low bandwidth, since the encoding based on the vectorised spatiotemporal surfaces and the texture paint attributes, even in the base layers, allows to decode the video signal to a satisfactory result. In an embodiment, said vectorising module is configured for vectorising said spatiotemporal surfaces iteratively in a cascaded manner, in order to determine a plurality of layers, of which plurality of layers a first layer comprises a first number of vectorising parameters configured for modelling a first number of vectorised spatiotemporal surfaces of said spatiotemporal surfaces and a second layer comprises a second number of vectorising parameters configured for modelling a second number of more closely-fitting vectorised spatiotemporal surfaces of said spatiotemporal surfaces.

In this manner, the method caters respectively further caters to different devices that are served from a single video representation using quality layers, even when the device has a large resolution and a low bandwidth, since the encoding based on the vectorised spatiotemporal surfaces and the texture paint attributes, even in the base layers, allows to decode the video signal to a satisfactory result.

In an embodiment, said spatiotemporal edge detector is configured for: smoothing a frame under consideration of said video signal spatiotemporally using an asymmetric exponentially decaying window; computing intensity gradients spatiotemporally; applying non-maximum suppression spatiotemporally; and thresholding edges spatiotemporally, using hysteresis thresholding extending along a time dimension of said video signal over a finite number of frames of said video signal preceding said frame under consideration.

In this manner, the temporal dimension can be taken into account efficiently, even given limited processing resources. In particular, when performing only forward propagation, one single past frame may be used, whereas more frames may be used when performing both forward and backward propagation.

In an alternative embodiment, the detecting comprises extracting edges (i.e. surfaces) with similar properties by evaluating gradient magnitude using a filter, thresholding, and thinning, morphological or otherwise.

In another embodiment, thinning spatiotemporal surface of said detected number of spatiotemporal surfaces comprises morphologically eroding voxels of said spatiotemporal surface while preserving topology.

In this manner, the vectorisation can be performed more effectively.

In an embodiment, said vectorising module is configured for, prior to said vectorising, spatiotemporally analysing a 26 voxel-connected neighbourhood of each voxel of said spatiotemporal surfaces in order to determine disjoint surface segments for said voxel.

In an embodiment, said vectorising module is configured for fitting spatiotemporal surfaces of said spatiotemporal surfaces in order to determine a number of control points and a number of local geometric derivatives for said spatiotemporal surfaces, using at least one of the following: a three-dimensional Bezier surface fitting algorithm; linear patches; splines; and NURBS (non-uniform rational basis splines).

In an embodiment, said attribute tracer is configured for sampling texture paint characteristics on at least one side, preferably on either side, of a respective vectorised spatiotemporal surface of said vectorised spatiotemporal surfaces, at control points of said vectorised spatiotemporal surface, and at a distance from said vectorised spatiotemporal surface based on a thickness of an original video signal contour corresponding with said vectorised spatiotemporal surface.

In particular, in a specific embodiment, the encoder may comprise a thinning module configured for thinning said detected number of spatiotemporal surfaces. In this manner, as a post-processing step to said detecting or as a pre-processing step to said vectorising, the steps of said detecting and said vectorising may be better adjusted to each other, such that said vectorising may be performed for the thinned spatiotemporal surfaces.

In another embodiment, said vectorising comprises fitting spatiotemporal surfaces of said spatiotemporal surfaces in order to determine a number of control points and a number of local geometric derivatives for said spatiotemporal surfaces, using at least one of the following: a three-dimensional Bezier surface fitting algorithm; linear patches; splines; and NURBS (non-uniform rational basis splines).

In an further developed embodiment, said vectorising uses implicit functions.

In another embodiment, determining said number of texture paint attributes for said vectorised spatiotemporal surfaces comprises sampling texture paint characteristics on at least one side, preferably on either (i.e. on each of two) side, of a respective vectorised spatiotemporal surface, at control points of said vectorised spatiotemporal surface, and at a distance from said vectorised spatiotemporal surface based on a thickness of an original video signal contour corresponding with said vectorised spatiotemporal surface.

In this manner, edge thickness or amount of blur of original video signal contours can be taken into account when encoding, in order to ensure that said sampling is performed at an appropriate distance from said vectorised spatial surface, and not within said original video signal contour.

In a particular embodiment, the control points are by-products from the vectorisation, and are therefore likely to be salient points, in that they are situated in or near relevant texture paint environments.

In this manner, the encoder is more efficient by re-using previously obtained results.

In a further developed embodiment, this is performed by building a 4D spatiotemporal image pyramid and by analysing the scale of each voxel in order to determine whether said voxel is in a spatially detailed or temporally fast-moving region, or in a smooth, blurry region.

According to a second aspect of the invention, there is provided a decoder for decoding an encoded video signal, comprising an obtaining module, a rasteriser, a solver and a post-processing module. The obtaining module is configured for obtaining said encoded video signal comprising a number of vectorised spatiotemporal surfaces and a number of texture paint attributes. The rasteriser is configured for rasterising said number of texture paint attributes, by painting said number of texture paint attributes on a spatiotemporal canvas, guided by said number of vectorised spatiotemporal surfaces, in order to determine constraint maps. The solver is configured for filling said spatiotemporal canvas using a spatiotemporal grid based on said constraint maps, using an optimisation algorithm. The post-processing module is configured for post-processing said reconstructed video signal by blurring edges along said discretised spatiotemporal grid.

The skilled person will understand that the hereinabove described considerations and advantages also apply for embodiments of the decoder, *mutatis mutandis*.

In an embodiment, said decoder comprises an optional quality layer selection module configured for selecting at least a first layer from said encoded video signal and optionally each consecutive layer up to a desired layer of said encoded video signal, if said encoded video signal comprises a scalable plurality of at least two consecutively ordered layers.

In an embodiment, said encoded video signal comprises scale information representing original local thicknesses of original video signal contours corresponding with said vectorised spatiotemporal surfaces; and wherein said post-processing module is configured for performing said blurring taking into account said scale information.

According to another aspect of the invention, there is provided a system for encoding a video signal and decoding an encoded video signal, comprising an encoder as described hereinabove and a decoder as described hereinabove.

The skilled person will understand that the hereinabove described considerations and advantages also apply for embodiments of this system, *mutatis mutandis*.

According to another aspect of the invention, there is provided a method for encoding of a video signal, comprising at a computing device the following step: detecting a number of spatiotemporal surfaces (i.e. image boundaries, spatially and/or temporally) of said video signal, using a spatiotemporal edge detector. The method also comprises vectorising said spatiotemporal surfaces. The method also comprises determining for said vectorised spatiotemporal surfaces a number of texture paint attributes, said number of texture paint attributes characterising at least one of a colour and a texture on at least one side of a respective vectorised spatiotemporal surface of said vectorised spatiotemporal surfaces. The method also comprises encoding said video signal based on said vectorised spatiotemporal surfaces and said number of texture paint attributes.

In this manner, by encoding the video signal on the basis of vectorised spatiotemporal surfaces, video signals can be represented efficiently, and hence requirements for storage and transmission can be reduced. Also, by using a vector-based representation and texture paint attributes, the method allows to encode video signals in line with MOS rather than with PSNR. Consequently, if limited bandwidth enforces the encoder to transmit degraded video, or also if a transmission error occurs, there is less likelihood of a visually disturbing artefact occurring.

In a specific embodiment, the method comprises thinning said detected number of spatiotemporal surfaces. In this manner, as a post-processing step to said detecting or as a pre-processing step to said vectorising, the steps of said detecting and said vectorising may be better adjusted to each other, such that said vectorising may be performed for the thinned spatiotemporal surfaces.

In a particular embodiment, a texture paint attribute comprises at least one of: a paint colour indication; a dictionary-based dynamic texture; and a generative dynamic texture.

It is a further object of some embodiments of the present invention to serve different devices from a single video representation using quality layers, where the quality range corresponds to our human perception of 'simplified' to more 'detailed' versions of the content.

In an embodiment, detecting said number of spatiotemporal surfaces is performed iteratively in a cascaded manner, in order to determine a plurality of layers, of which plurality of layers a first layer comprises a first number of spatiotemporal surfaces and a second layer comprises a second number of more fine-grained spatiotemporal surfaces detected with a more precise granularity.

In this manner, the method caters to different devices that are served from a single video representation using quality layers, even when the device has a large resolution and a low bandwidth, since the encoding based on the vectorised spatiotemporal surfaces and the texture paint attributes, even in the base layers, allows to decode the video signal to a satisfactory result.

In another embodiment, vectorising said spatiotemporal surfaces is performed iteratively in a cascaded manner (e.g. by successively restricting an error bound parameter to be satisfied by all vectorised spatiotemporal surfaces of a given iteration), in order to determine a plurality of layers, of which plurality of layers a first layer comprises a first number of vectorising parameters configured for modelling a first number of vectorised spatiotemporal surfaces of said spatiotemporal surfaces and a second layer comprises a second number of vectorising parameters configured for modelling a second number of more closely-fitting vectorised spatiotemporal surfaces of said spatiotemporal surfaces detected with a more precise granularity.

In this manner, the method caters respectively further caters to different devices that are served from a single video representation using quality layers, even when the device has a large resolution and a low bandwidth, since the encoding based on the vectorised spatiotemporal surfaces and the texture paint attributes, even in the base layers, allows to decode the video signal to a satisfactory result.

In another embodiment, detecting said number of spatiotemporal surfaces of said video signal using a spatiotemporal edge detector comprises: smoothing a frame under consideration of said video signal spatiotemporally using an asymmetric exponentially decaying window; computing intensity gradients spatiotemporally; applying non-maximum suppression spatiotemporally; and thresholding edges spatiotemporally, using hysteresis thresholding extending along a time dimension of said video signal over a finite number of frames of said video signal preceding said frame under consideration.

In this manner, the temporal dimension can be taken into account efficiently, even given limited processing resources. In particular, when performing only forward propagation, one single past frame may be used, whereas more frames may be used when performing both forward and backward propagation.

In an alternative embodiment, the detecting comprises extracting edges (i.e. surfaces) with similar properties by evaluating gradient magnitude using a filter, thresholding, and thinning, morphological or otherwise.

In another embodiment, thinning said detected number of spatiotemporal surfaces comprises morphologically eroding voxels of said spatiotemporal surface while preserving topology.

In this manner, the vectorisation can be performed more effectively.

In another embodiment, the method comprises, prior to said vectorising, spatiotemporally analysing a 26 voxel-connected neighbourhood of each voxel of said spatiotemporal surfaces in order to determine disjoint surface segments for said voxel.

In another embodiment, said vectorising comprises fitting spatiotemporal surfaces of said spatiotemporal surfaces in order to determine a number of control points and a number of local geometric derivatives for said spatiotemporal surfaces, using at least one of the following: a three-dimensional Bezier surface fitting algorithm; linear patches; splines; and NURBS (non-uniform rational basis splines).

In an further developed embodiment, said vectorising uses implicit functions.

In another embodiment, determining said number of texture paint attributes for said vectorised spatiotemporal surfaces comprises sampling texture paint characteristics on at least one side, preferably on either (i.e. on each of two) side, of a respective vectorised spatiotemporal surface, at control points of said vectorised spatiotemporal surface, and at a distance from said vectorised spatiotemporal surface based on a thickness of an original video signal contour corresponding with said vectorised spatiotemporal surface.

In this manner, edge thickness or amount of blur of original video signal contours can be taken into account when encoding, in order to ensure that said sampling is performed at an appropriate distance from said vectorised spatial surface, and not within said original video signal contour.

In a particular embodiment, the control points are by-products from the vectorisation, and are therefore likely to be salient points, in that they are situated in or near relevant texture paint environments.

In this manner, the method is more efficient by re-using previously obtained results.

In a further developed embodiment, this is performed by building a 4D spatiotemporal image pyramid and by analysing the scale of each voxel in order to determine whether said voxel is in a spatially detailed or temporally fast-moving region, or in a smooth, blurry region.

According to another aspect of the invention, there is provided a method for decoding an encoded video signal, comprising at a computing device the following step: obtaining said encoded video signal comprising a number of vectorised spatiotemporal surfaces and a number of texture paint attributes. The method also comprises rasterising said number of texture paint attributes, by painting said number of texture paint attributes on a spatiotemporal canvas, guided by said number of vectorised spatiotemporal surfaces, in order to determine constraint maps. The method also comprises filling said spatiotemporal canvas using a spatiotemporal grid based on said constraint maps, using an optimisation algorithm. The method also comprises post-processing said reconstructed video signal by blurring edges along said discretised spatiotemporal grid.

In a specific embodiment, the optimisation algorithm is global if enough computing power is present, or local otherwise.

The skilled person will understand that the hereinabove described considerations and advantages also apply for embodiments of the method for decoding, *mutatis mutandis*.

In a particular embodiment, said encoded video signal comprises at least two consecutively ordered layers of a scalable plurality of layers, and wherein said method comprises selecting at least a first layer from said scalable plurality of layers and optionally each consecutive layer up to a desired layer of said scalable plurality of layers.

In a further developed embodiment, said selecting is performed by comparing pre-defined profiles against bandwidth limitations and/or screen resolution, by learning the relation between these and the number of layers, and/or by letting a user increase or decrease quality and hence control bandwidth.

In a preferred further developed embodiment, said selecting is dynamic and is open for renegotiation as conditions change.

In another embodiment, said encoded video signal comprises scale information representing original local thicknesses of original video signal contours corresponding with said vectorised spatiotemporal surfaces; and wherein said blurring takes into account said scale information. According to another aspect of the invention, there is provided a method for encoding a video signal and decoding an encoded video signal, comprising all of the steps of any one of the methods for encoding a video signal as described hereinabove, and all of the steps of any one of the methods for decoding an encoded video signal as described hereinabove.

The skilled person will understand that the hereinabove described considerations and advantages also apply for embodiments of this method, *mutatis mutandis*.

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, *mutatis mutandis*.

### Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:
Figure 1 illustrates schematically an embodiment of a system according to the present invention;
Figure 2A illustrates schematically the operation of an embodiment of an encoder according to the present invention;
Figure 2B illustrates schematically the operation of an embodiment of a decoder according to the present invention;
Figure 3 illustrates schematically tracing attributes;
Figure 4 illustrates schematically schematically spatiotemporal edge detection; and
Figures 5A-C illustrate schematically three examples of a two-dimensional layer of multiple quality layers as produced by an embodiment of an encoder according to the present invention.

### Description of Embodiments

Embodiments of the present invention consider the 'simplified vs. complex'-problem as an edge representation problem: some edges in the image are perceived important, while others are not and may be merged or omitted. Object boundaries and depth discontinuities are often important. Less important edges usually come from texture properties (e.g. water, foliage, carpet, skin, etc.). It would be advantageous for an encoder to distinguish between those two classes and for those two classed to be treated accordingly in a decoder.

The first class of edges may be termed 'surfaces' or 'contours'. These surfaces inhibit paint propagation. Surfaces or contours create discontinuities in the way the video is rendered to their left and to their right. The surfaces may be spatiotemporal, representing both spatial object boundaries and temporal occlusions. These surfaces may preferably be represented in a non-discretised way, so as to remain sharp over the range of rendering resolutions. There are multiple ways to parameterise a continuous surface. Next to its geometry, the representation may include different attributes per surface or contour, like edge sharpness and gradient information.

The second class of elements may describe the texture paint that should be used in between the surfaces or contours. This may be as simple as a single colour paint, but also dynamic textures may fill that space, either dictionary-based or generative. These may be represented as seeds, either individual or aligned with the contours, that propagate their properties while surfaces (i.e. contours) constrain their influence, as well spatially as temporally.

It may be considered to use scalable supplementary quality layers. A low bandwidth base layer may comprise a coarse geometry of the most prominent contours and may describe the base behaviour of few paint seeds. Additional layers may add detail to the contours, reveal finer contours and add seeds with more complex, texturized behaviour. In this manner, quality layers are not as much linked to frequency components, but rather to the human perception of 'simple vs. complex' importance of edges.

This representation can be considered unified yet may serve a heterogeneous group of devices. Their decoders may rasterize the continuous, parameterised representation, i.e. solve the inverse problem of imposing the behaviour of contours and seeds on a discrete spatiotemporal grid, tailored specifically to the devices' needs and rendering capabilities. The devices may ask for additional quality layers, depending on bandwidth limits and their computational power.

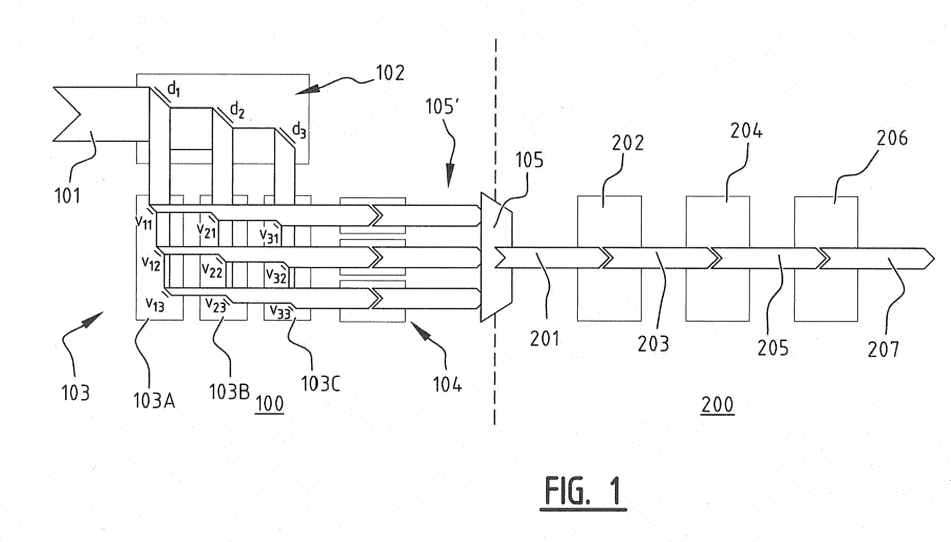

Figure 1 illustrates an embodiment of a system according to the present invention, comprising an encoder 100 and a decoder 200. Exemplary operations for the encoder 100 and the decoder 200 are shown.

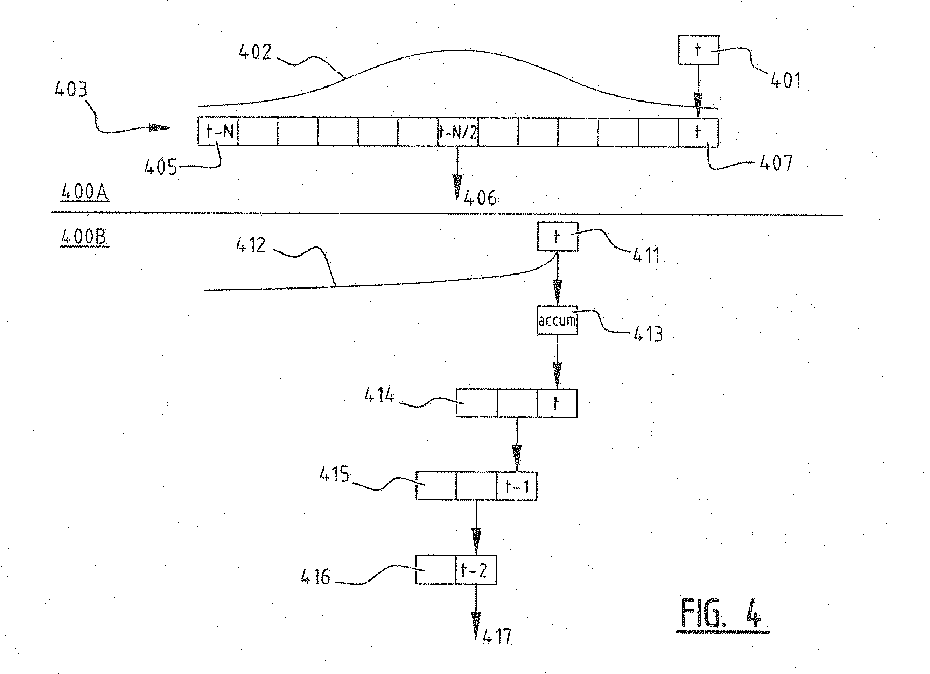

The encoder 100 may receive a video signal as input 101 to be encoded. In operation 102, the encoder 100 may detect a number of spatiotemporal surfaces (i.e. surfaces defined in a space comprising two spatial dimensions and a time dimension) of said video signal. The encoder 100 may use a spatiotemporal edge detector for that purpose, as is further described with respect to Figure 4.

In specific embodiments, the spatiotemporal surfaces may be detected iteratively in a cascaded manner, in order to determine a plurality of layers, e.g. in order to allow scalable video layer encoding of the video signal to be encoded, of which plurality of layers a first layer comprises a first number of spatiotemporal surfaces and a second layer comprises a second number of more fine-grained spatiotemporal surfaces detected with a more precise granularity, e.g. such that the surfaces of the second layer are more fine-grained, i.e. more detailed, than the surfaces in the first layer, e.g. to allow users with a high bandwidth to enjoy a higher-quality video signal. It may be chosen to have said second number of more fine-grained spatiotemporal surfaces include or not include (i.e. form a disjoint set of surfaces complementary with) or include only a part of said first number of spatiotemporal surfaces. Further, when three or more layers are present, each higher-quality (i.e. more fine-grained) layer may be deemed a "second layer" with respect to a less high-quality (i.e. less fine-grained) layer, which may be deemed a "first layer" relative to said "second layer".

In a particular embodiment, the iterative detection may use a number of parameters or sets of parameters, here indicated as d₁, d₂, d₃, e.g. in order to allow iterative detection in a cascaded manner, e.g. by using increasingly less constraining parameters or sets of parameters. The parameters or sets of parameters are configured such that the most basic edge contours (i.e. spatiotemporal surfaces) are extracted using the first parameter or set of parameters d₁, and such that increasingly more detailed edge contours are extracted with each next parameter or set of parameters d₂, d₃, etc. As a result, in the Figure three layers (i.e. 'stages') are shown, for each of d₁, d₂, d₃. Each layer holds additionally detailed edge contours.

However, the skilled person will understand that the cascade may also comprise two, or four or more such layers and corresponding parameters or sets of parameters. Also, the skilled person will understand that iterative, cascaded detection is optional.

The encoder 100 may optionally also thin the detected spatiotemporal surfaces, e.g. in order to ensure that edge surfaces are thin (i.e. have a limited number of voxels in their diameter), either spatially (e.g. for a static contour), temporally (e.g. for an occlusion) or along a non-aligned axis (e.g. for a moving contour). Further, it may be preferred that the surfaces are connected in a 26-neighbourhood (i.e. for a three-dimensional spatiotemporal voxel, its eight immediate neighbours in two spatial dimensions at the same instance of time and in addition twice its nine immediate neighbours in two spatial dimension at the immediately previous instance of time and at the immediately subsequent instance of time). By optionally thinning the edges, redundant information of smooth, blurry edges may be centralised into one segment, rather than having several small steps. In further developed embodiments of decoder 200, the centralised information may later be used or approximated for correctly or approximately correctly inverting this optional thinning.

The encoder 100 may, in operation 103, also vectorise the optionally thinned spatiotemporal surfaces, e.g. in order to allow a more efficient encoding (vector-based images require less storage space and less transmission bandwidth than raster-based images).

In the Figure, each of the three layers resulting from (the stages of) the cascaded detection of the spatiotemporal surfaces is itself vectorised iteratively in a cascaded manner, respectively in operations 103A, 103B and 103C. To this end, the encoder 100 may use a surface fitting algorithm. For this algorithm, an error bound parameter v may be used, as is illustrated in the Figure. The parameter v may function as an error bound, e.g. such that decreasing the parameter will yield more accurately modelled contours (i.e. surfaces), but increases the size of the vectorised representation.

The algorithm may be run once to find fitting surfaces, or it may be run iteratively in cascade. Also, it may operate on a signal wherein spatiotemporal surfaces have been detected (and optionally thinned) without iteration in a cascaded manner. In this example, the algorithm is run for each set of detected contours and also in cascade with decreasing parameter tunings, e.g. in order to retrieve increasing levels of detail. For each contour set i (columns in the Figure) and each output layer j (rows in the Figure), there may be present a differently tuned parameter vᵢⱼ. These parameters may even be so restrictive for the base layers (low j) that some of the detailed contours (high i) don't get represented by that layer at all and are fully forwarded to the next layer j+1. It is noted that there is no need to restart the vectorisation algorithm at each stage - it is possible to just continue the algorithm's iterations. Redundant information coming from the most basic stage is then not repeated in subsequent stages.

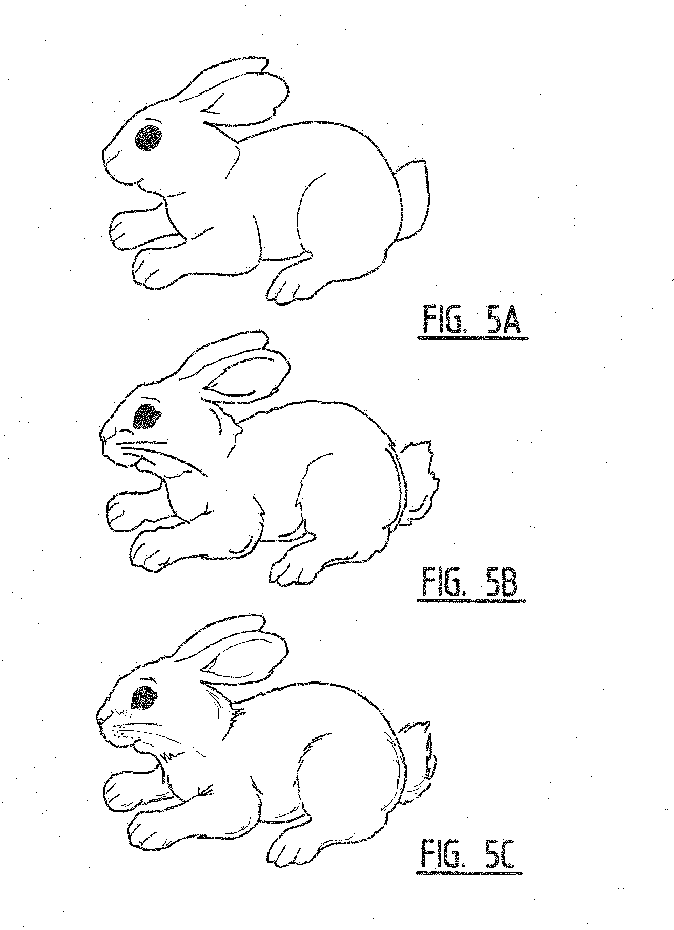

In the example, next, the representation of the first vectorisation stages of each contour set are grouped into layer 1. Those of all second stages are grouped into layer 2, etc. All vectorised contour segments are then assigned attributes, characterizing the colours and/or textures along either but preferably both sides of the contour. These attributes may include colour seeds at either or each side of the edge, colour gradient info in the spatiotemporal domain, edge sharpness, ... Figures 5A-5C show (two-dimensional) examples of a three-layered representation, as is further described below.

In a further developed embodiment, Since there is no formal difference between the elements inside all output layers, and since computational complexity does not change by having more stages inside the vectorisation cascade, it is possible to have many layers, up to the point where the output is actually a sorted list of concatenated control points (each additional layer contains one control point). A good balance can be set by evaluating the overhead that this would create.

The scalable plurality of layers 105' (or a subset thereof), or, if no layered encoding is used, the single output video signal (not shown) may be transmitted 105 or otherwise provided to and obtained by the decoder 100 or to multiple decoders.

The decoder 200 may, in some embodiments, select 201 at least one layer from the scalable plurality of layers 105'. In further developed embodiments, this selection may be set by comparing pre-defined profiles against bandwidth limitations and screen resolution, by learning the relation between these and the number of layers, or even by letting the user increase or decrease quality and hence control bandwidth. Also, because the context may vary over time, the selected 201 number of scalable layers 105' may be dynamic and may be renegotiated as conditions change.

In operation 202, the decoder 20 may undo vectorisation, i.e. (re-)rasterize the texture paint attributes alongside the vectorised surfaces. This stage 202 may paint the attributes on one or more spatiotemporal canvasses, guided by the vectorised spatiotemporal surfaces (i.e. 'contours'), in order to determine constraint maps 203, which may be used for the next stage, and which constraint maps may be only sparsely filled.

Secondly, the decoder 200 undoes the encoder's 100 contour detection. This means that it has to revert from having sparse contours to having pixel values 205 for each location on the canvas ('filling' 204). This is a global optimization problem that implies smoothness of the video, constrained by the maps 203 from the previous stage.

Then, the decoder 200 can revert the optional contour thinning of the encoder's 100 spatiotemporal edge detector. That has optionally reduced the true blurry contours to thin surfaces to centralize otherwise redundant information onto single objects. The result of the previous stage would yield sharp edges. A post-processing stage 206 may re-blur them (along the discretised spatiotemporal grid) depending on the scale information coming from the contour detection stage, to produce the decoded video signal output 207.

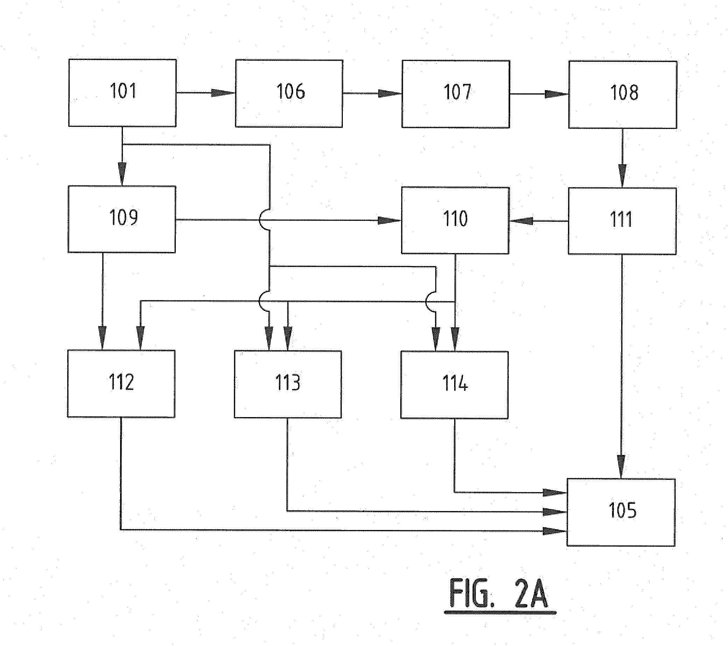

Figure 2A illustrates the exemplary operation of an embodiment of an encoder 100 according to the present invention. The Figure shows an input video signal 101, 3D Canny edge detection 106, optional morphological thinning 107, splitting into segments 108, spatiotemporal scale analysis 109, trace attribute surfaces 110, Bezier surface fitting 111, samples scales 112, sample colours 113, sample gradients 114, and transmission 105.

The input video signal 101 is run through the 3D Canny edge detector 106 at various parameter settings, yielding several complementary sets of contour voxels. This outputs a discrete map labeling each spatiotemporal voxel to zero (i.e. not a contour voxel) or the index of the corresponding complementary set of contours. This map is then optionally thinned by using morphological erosion 107, preserving the topology to create 1-voxel thin contours.

After that, the local 26-connected neighborhood of each pixel is analyzed and curves where multiple surfaces join are marked, resulting in a disjoint set of contour segments 108, still labeled with the indices of their corresponding Canny parameters. For each contour segment, the encoder 100 traces all spatiotemporal pixels and fit a Bezier surface 111 through it against a very coarse error bound. The resulting control points go into layer 1. Then the encoder 100 lowers the threshold and adds the control points to layer 2 and so forth, resulting in multiple layers of different detail.

The encoder 100 may also build a 4D spatiotemporal image pyramid and analyze the scale of each voxel. Voxels at small scales are in spatially detailed regions or temporally fast-moving regions of the video. Voxels at large scales are in smooth, blurry regions. The output is a 3D continuous scalar map. This map is used to define the sampling surfaces along both sides of the Bezier segments.

Three different samplers are used 110. First, the scalar map itself 112 is sampled. This is used in the post-processing step of the decoder. Secondly, the color intensity 113 and at last the color gradient 114 orthogonal to the surface are sampled. Per local weighted neighborhood around the control points, these samples are aggregated and their mean and first derivative (in both directions of the surface) are kept, or equivalently an attribute value is added to the handles of the control point.

All control points and their attributes are transmitted in their respective quality layers.

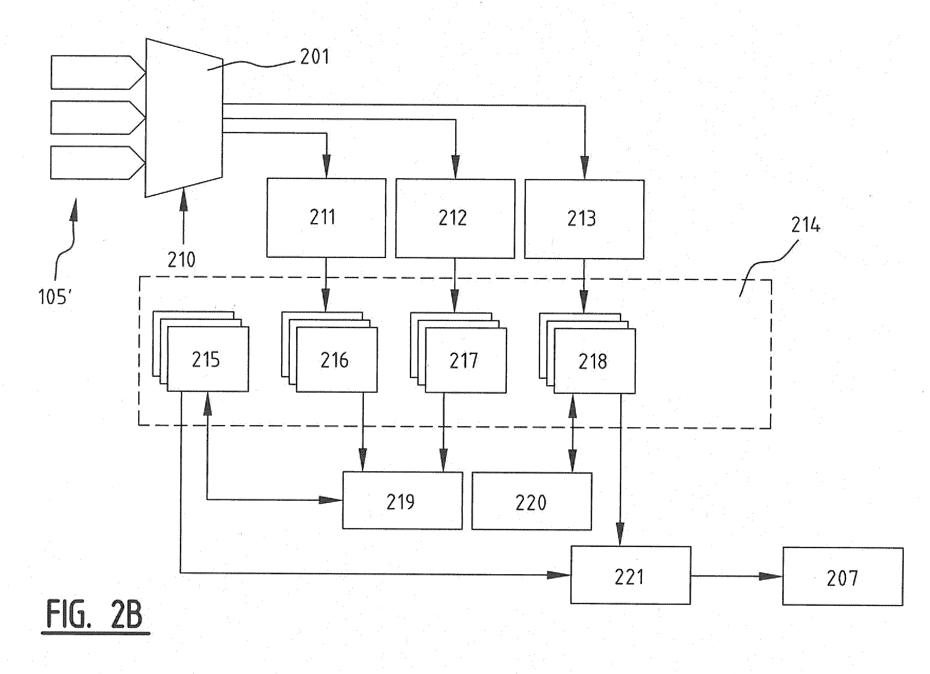

Figure 2B illustrates the operation of an embodiment of a decoder 200 according to the present invention. The Figure shows selecting 201 one or more quality layers from a number of quality layers 105', based on requirements 210, rasterising colour paint seeds 211, rasterising gradient information 212, rasterising blur information 213, a framebuffer 214 with RGB (red-green-blue) pixels 215, colour constraints 216, gradient constraints 217 and blur maps 218, a Poisson solver 219, a Laplace solver 220, blurring 221, and output 207.

The decoder 200 has to solve the inverse problem of re-rasterizing the vectorised input. First, the decoder 200 needs to choose 201 how many quality layers 105' it needs. This may be set by comparing pre-defined profiles (or requirements 210) against bandwidth limitations and screen resolution, by learning the relation between these and the number of layers, or even by letting a user increase or decrease quality and hence control bandwidth. Also, because the context may vary over time, this is a dynamic parameter and can be renegotiated as conditions change.

Attributes belonging to contour segments and associated control points are all rasterized 211-213 to the corresponding attribute maps: color seed constraints 211, gradient maps 212, blur maps 213, ... It is noted that these maps 211-213 are spatiotemporal and only sparsely filled. Next, the decoder 200 may use an optimization algorithm 219 to fill the spatiotemporal canvas, i.e. to estimate the color values at each pixel of the spatiotemporal grid, guided by said constraint maps. An embodiment of the decoder uses a 3D constrained Poisson solver 219. To reduce the number of iterations, it may be put in a spatiotemporal pyramidal framework. However, because it would yet be infeasible to contain those spatiotemporal attribute maps 216-218 and the whole output video within the computing device's memory, it is required or at least advantageous to approximate the global optimization by a local optimization over a limited spatiotemporal slice, preferably a limited buffer of video frames. Algorithms exist that allow this kind of localization of the Poisson solver 219, e.g. by Jacobi iterations or Successive Over-Relaxation. The size of the buffer depends on delay, memory and quality requirements. Alternative solutions to the Poisson equation include solving it in the frequency domain, using FFT.

Re-blurring 221 of edges can be obtained by a post-processing step, by interpolating pixels 215 from a spatiotemporal image pyramid, according to the level-of-detail set by the dense blur maps. To get dense blur maps from the sparse blur attribute maps 218, the decoder 200 may comprise a Laplace solver 220, similar to the Poisson solver, but without gradient constraints.

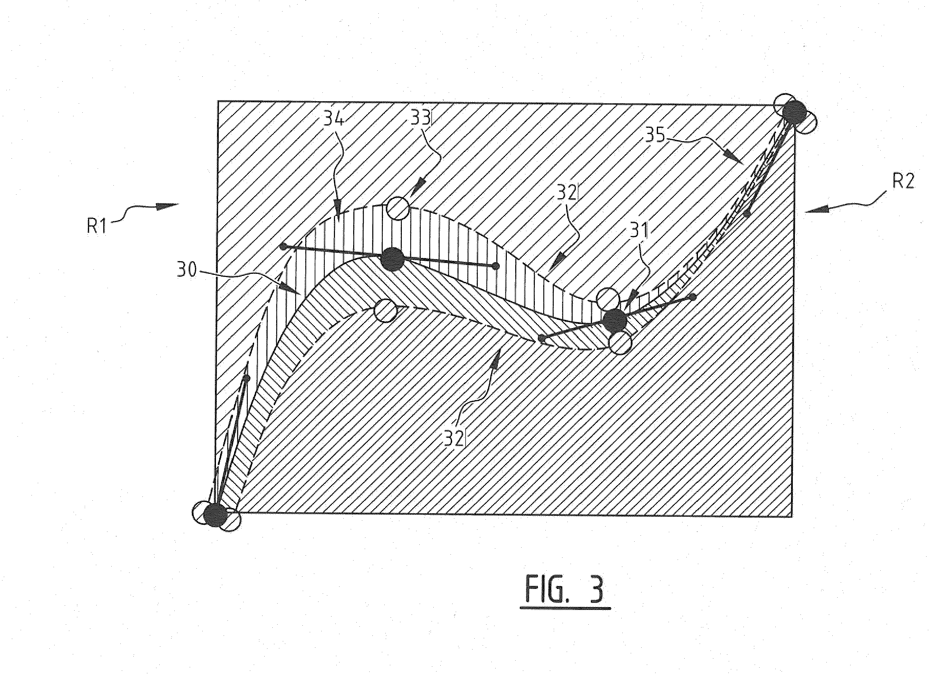

Figure 3 illustrates schematically tracing attributes. The Figure shows a first video region R1 and a second video region R2 along two dimensional axes (e.g. two spatial dimensions for a video frame at a given instance of time, or e.g. one spatial dimension and a time dimension). A surface 30 (or 'contour') is shown amid the first and second video regions R1 and R2. The surface has a relatively thicker edge 34 and a relatively thinner edge 35. The surface 30 is defined with a number of control points, including control point 31. In this example, four control points are used, but the skilled person will understand that more or less control points may be determined when vectorising, depending on required accuracy of fit, on time and processing resources and on storage and transmission requirements. The Figure further shows a number of attributes, including attribute 33 (which is defined on both sides of the surface 30), and two attribute sampling surfaces 32.

Attributes are assigned per control point based on local sampling along both sides of the contour. Where edges are thick or blurry, the video is sampled at a wider distance from the contour surface. For illustration purposes, a 2D contour is drawn. In fact, it is a spatiotemporal surface. By assigning attributes per control point, the encoder 100 may benefit in that the vectorisation operation already determines salient points (viz. the control points), such that assigning attributes per control point may recuperate (part of) that effort.

Now, the encoder 100 has produced a parametric (vectorised) description of the contours, and they can therefore be traced to analyse video properties on both sides. It may be expected that these properties vary alongside the contour. E.g. a contour seldom separates a uniform colour patch from another uniform patch; it is more likely that we encounter varying shades and textures on both sides.

A particular embodiment of the invention aligns this variation of the properties with the geometrical variation, which were captured hereinabove using Bezier-surfaces defined by control points. In each control point it is possible to attribute a mean property and local derivatives in both surface directions. This is the same procedure as what is done for surface fitting, be it that it inherits the control points defined there and doesn't remove or add others. For this, the encoder 100 solves an overdetermined linear system of equations resulting from the cubic nature of the Bezier surface equations.

This embodiment simply analyses the colour intensities around the control points 31 on both sides of the surface 30. Since the surface 30 in this embodiment is a thinned version of the actual spatiotemporal gradient, the algorithm first analyses the scale space of the image to retrieve the original thickness (i.e. the amount of blur in the original video signal) of the contour. This ensures that colours are sampled at an appropriate distance 32. This distance will be bigger for thick contours 34 in coarse scale regions, and smaller for thin contours 35, i.e. in fine grained regions.

Figure 4 illustrates schematically spatiotemporal edge detection.

In a first embodiment, the encoder 100 uses a 3D Canny edge detector. The 3D detector is a natural extension of the classical 2D Canny edge detector by including the temporal axis. Although a perfect 3D extension of the Canny edge detector would require all video frames to be known and reside in memory before start, it is possible to approximate this by a small symmetric buffered approach for offline and even an asymmetric buffered approach for online encoding. This allows for lower delays and lower memory requirements.

Canny edge detection consists out of 4 stages: a smoothing stage, a gradient magnitude computation, non-maximum suppression and hysteresis thresholding. A nice symmetrical Gaussian smoothing window 402 would require a buffer of N/2 frames ahead and N/2 frames back around the current frame for storage, with N being the width of the window 403. This already introduces a buffer latency of N/2 frames to produce frame 406 from a new frame 401, as is shown in the Figure in situation 400A. However, using an asymmetric exponentially decaying window 412, as is shown in the Figure in situation 400B, we would not need any frames ahead, and only 1 accumulation register 413. This significantly reduces memory requirements, time complexity and introduces no latency. It is noted that this smoothing may bias past frames.

The second 414 and third 415 stage both need to see 1 frame in advance and 1 frame back of the output of their respective preceding stages, introducing an inevitable latency of 2 frames and a buffer of 4. In theory, the hysteresis thresholding step 416 requires an infinite buffer with all the frames being available, because it traces contours in both directions. Again a suboptimal result 417 can be achieved by only tracing forward. This way, a buffer of only 1 frame back and no in advance is needed, by propagating old surface voxels forward into the current frame.

In total, the temporal extension of Canny edge detection will introduce a latency of 2 frames in an online setting, using the suboptimal shortcuts for efficiency.

The Canny algorithm has some parameters (e.g. pre-smoothing filter width, low and high thresholds) that may be used to specify the various parameter sets d₁, d₂,... for the cascading approach.

Although the Canny edge detector performs non-maximal suppression 415, it doesn't yield perfectly 1-voxel thin surfaces. This means that there is optionally a need for further morphological thinning, for which topology preserving erosion may be performed. This is needed, because the next stage 416 will trace the contours. Computationally, this is more easy if the local scope is within its 26-connected neighbourhood. Also, it is possible to label the 3D edge-map. This labelling step splits the collection of contours into single-surface segments. By looking at the 26-connected neighbourhood, the encoder 100 can see if and where two or more surfaces join. At such curves, a new segment should start, since the following vectorisation stage 103 can only deal with one surface at the time.

Alternative to the Canny approach, another embodiment of the invention extracts edges with similar properties by evaluating gradient magnitude with some filter, thresholding and again optional morphological thinning.

Figures 5A-C illustrate schematically three examples of a two-dimensional layer of multiple quality layers as produced by an embodiment of an encoder according to the present invention. It is shown in the Figures that the base layer includes fewer contours and less accurate vectorised approximations. Adding quality layers adds more contours as well as more detail to them. For example, Figure 5A may correspond with output layer 0; Figure 5B with output layer 0+1; and Figure 5C with output layer 0+1+2. Thickness of the lines indicates the detection stages. The thick lines (here mostly the outer lines) are contours with the coarsest detection level. The fine (here for example the bunny's whiskers) contours have the finest detection level.

An embodiment of the method for encoding a video signal and of the encoder comprises vectorising all of the edge segments from each stage by a 3D Bezier surface fitting algorithm. This is a less trivial extension of the 2D Ramer-Douglas-Peucker algorithm by adding a temporal axis. Decreasing the algorithm's error bound v will yield more control points in the vectorised representation to get the more accurate approximation. The algorithm is started at the largest error bound v₁ and outputs the control points to the first quality layer. Then, the error bound is decreased. The algorithm will add new control points to keep the surface within the new error bound v₂. These newly added control points are put in the second quality layer, and so on, till all layers are filled, or the error bound goes beyond the measureable pixel. Figures 5A-C were generated using this approach. Layer 0 (Figure 5A) requires about 50 control points, layer 1 (Figure 5B) adds about 200 control points and layer 2 (Figure 5C) requires another 400.

Each control point defines a 3D point in the spatiotemporal volume and (symmetrical) derivatives in both directions of the surface. Equivalently, different types of control points can be envisaged, such as handles instead of these derivatives. These handles do not lie on the surface, but guide its curvature.

Other embodiments of the method and the encoder may use alternative ways of vectorising surfaces. Related to Bezier surfaces, the other embodiments could use for linear patches, splines, NURBS (non-uniform rational basis splines), ... All of these techniques use control points and local geometry derivatives to describe the contours. A very different approach is to define them with implicit functions. These representation are not control point driven, but each implicit function also constrains the surfaces locally. Hence, this is another way of discretizing a continuous function.

A person of skill in the art would readily recognize that steps of various above-described methods can be performed by programmed computers. Herein, some embodiments are also intended to cover program storage devices, *e.g*. digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. An encoder for encoding a video signal, comprising:
- a spatiotemporal edge detector configured for detecting a number of spatiotemporal surfaces of said video signal;
- a vectorising module configured for said spatiotemporal surfaces; and
- an attribute tracer configured for determining for said vectorised spatiotemporal surfaces a number of texture paint attributes, said number of texture paint attributes characterising at least one of a colour and a texture on at least one side of a respective vectorised spatiotemporal surface of said vectorised spatiotemporal surfaces; and
wherein said encoder is configured for encoding said video signal based on said vectorised spatiotemporal surfaces and said number of texture paint attributes.

2. The encoder of claim 1, wherein said spatiotemporal edge detector is configured for detecting said number of spatiotemporal surfaces iteratively in a cascaded manner, in order to determine a plurality of layers, of which plurality of layers a first layer comprises a first number of spatiotemporal surfaces and a second layer comprises a second number of more fine-grained spatiotemporal surfaces.

3. The encoder of claim 1 or 2, wherein said vectorising module is configured for vectorising said spatiotemporal surfaces iteratively in a cascaded manner, in order to determine a plurality of layers, of which plurality of layers a first layer comprises a first number of vectorising parameters configured for modelling a first number of vectorised spatiotemporal surfaces of said spatiotemporal surfaces and a second layer comprises a second number of vectorising parameters configured for modelling a second number of more closely-fitting vectorised spatiotemporal surfaces of said spatiotemporal surfaces.

4. The encoder of any one of the previous claims, wherein said spatiotemporal edge detector is configured for:
- smoothing a frame under consideration of said video signal spatiotemporally using an asymmetric exponentially decaying window;
- computing intensity gradients spatiotemporally;
- applying non-maximum suppression spatiotemporally; and
- thresholding edges spatiotemporally, using hysteresis thresholding extending along a time dimension of said video signal over a finite number of frames of said video signal preceding said frame under consideration.

5. The encoder of any one of the previous claims, wherein said vectorising module is configured for, prior to said vectorising, spatiotemporally analysing a 26 voxel-connected neighbourhood of each voxel of said spatiotemporal surfaces in order to determine disjoint surface segments for said voxel.

6. The encoder of any one of the previous claims, wherein said vectorising module is configured for fitting spatiotemporal surfaces of said spatiotemporal surfaces in order to determine a number of control points and a number of local geometric derivatives for said spatiotemporal surfaces, using at least one of the following: a three-dimensional Bezier surface fitting algorithm; linear patches; splines; and NURBS (non-uniform rational basis splines).

7. The encoder of any one of the previous claims, wherein said attribute tracer is configured for sampling texture paint characteristics on at least one side, preferably on either side, of a respective vectorised spatiotemporal surface of said vectorised spatiotemporal surfaces, at control points of said vectorised spatiotemporal surface, and at a distance from said vectorised spatiotemporal surface based on a thickness of an original video signal contour corresponding with said vectorised spatiotemporal surface.

8. A decoder for decoding an encoded video signal, comprising:
- an obtaining module configured for obtaining said encoded video signal comprising a number of vectorised spatiotemporal surfaces and a number of texture paint attributes;
- a rasteriser configured for rasterising said number of texture paint attributes, by painting said number of texture paint attributes on a spatiotemporal canvas, guided by said number of vectorised spatiotemporal surfaces, in order to determine constraint maps ;
- a solver configured for filling said spatiotemporal canvas using a spatiotemporal grid based on said constraint maps, using an optimisation algorithm;
- a post-processing module configured for post-processing said reconstructed video signal by blurring edges along said discretised spatiotemporal grid.

9. The decoder of claim 8, comprising an quality layer selection module configured for selecting at least a first layer from said encoded video signal and optionally each consecutive layer up to a desired layer of said encoded video signal, if said encoded video signal comprises a scalable plurality of at least two consecutively ordered layers.

10. The decoder of any one of the claims 8-9, wherein said encoded video signal comprises scale information representing original local thicknesses of original video signal contours corresponding with said vectorised spatiotemporal surfaces; and wherein said post-processing module is configured for performing said blurring taking into account said scale information.

11. A system for encoding a video signal and decoding an encoded video signal, comprising:
- an encoder according to any one of the claims 1-7; and
- a decoder according to any one of the claims 8-10.

12. A method for encoding of a video signal, comprising at a computing device:
- detecting a number of spatiotemporal surfaces of said video signal, using a spatiotemporal edge detector;
- vectorising said spatiotemporal surfaces;
- determining for said vectorised spatiotemporal surfaces a number of texture paint attributes, said number of texture paint attributes characterising at least one of a colour and a texture on at least one side of a respective vectorised spatiotemporal surface of said vectorised spatiotemporal surfaces; and
- encoding said video signal based on said vectorised spatiotemporal surfaces and said number of texture paint attributes.

13. A method for decoding an encoded video signal, comprising at a computing device:
- obtaining said encoded video signal comprising a number of vectorised spatiotemporal surfaces and a number of texture paint attributes;
- rasterising said number of texture paint attributes, by painting said number of texture paint attributes on a spatiotemporal canvas, guided by said number of vectorised spatiotemporal surfaces, in order to determine constraint maps;
- filling said spatiotemporal canvas using a spatiotemporal grid based on said constraint maps, using an optimisation algorithm;
- post-processing said reconstructed video signal by blurring edges along said discretised spatiotemporal grid.

14. A method for encoding a video signal and decoding an encoded video signal, comprising all of the steps of the method of claim 12, and all of the steps of the method of claim 13.

15. A computer program product comprising computer-executable instructions for performing a method when the program is run on a computer, the method comprising the steps of any one of the methods of any one of the claims 12-14.
